# FASCICULE DE BREVET EUROPEEN

(11) **EP 3 433 895 B1**
(45) Date de publication et mention de la délivrance du brevet: **08.01.2020**
(21) Numéro de dépôt: 17712512.7
(22) Date de dépôt: 23.03.2017
(51) Int. Cl.: H01M 8/1023, C08K 3/22

(54) **PROCEDE DE PREPARATION DE PARTICULES INORGANIQUES FONCTIONNALISEES PAR DES POLYMERES BIFONCTIONNELS CONDUCTEURS DE PROTONS**
VERFAHREN ZUR HERSTELLUNG VON ANORGANISCHEN, DURCH PROTONENLEITENDE BIFUNKTIONELLE POLYMERE FUNKTIONALISIERTEN PARTIKELN
METHOD FOR THE PREPARATION OF INORGANIC PARTICLES FUNCTIONALIZED BY PROTON-CONDUCTING BIFUNCTIONAL POLYMERS

(30) Priorité: 24.03.2016 FR 1652570
(43) Date de publication de la demande: 30.01.2019
(73) Titulaire: Commissariat à l'Energie Atomique et aux Energies Alternatives, 75015 Paris (FR)
(72) Inventeur: BUVAT, Pierrick, 37250 MONTBAZON (FR); BIGARRÉ, Janick, 37000 TOURS (FR); LABALME, Etienne, 66160 LE BOULOU (FR)
(74) Mandataire: Brevalex
(86) Numéro de dépôt international: PCT/EP2017/056981
(87) Numéro de publication internationale: WO 2017/162819

(56) Documents cités:
- WO-A1-2006/090862
- FR-A1- 2 967 925
- US-A1- 2010 196 786

## Description

### DOMAINE TECHNIQUE

La présente invention se rapporte à un procédé de préparation de particules inorganiques conductrices de protons par fonctionnalisation desdites particules avec des composés organiques porteurs d'au moins deux types différents de groupes échangeurs de protons.

La présente invention se rapporte également aux particules obtenues par ce procédé.

Ces particules ont pour caractéristique de présenter une capacité d'échange ionique particulièrement élevée.

De ce fait, ces particules trouvent leur application dans l'élaboration de matériaux conducteurs protoniques, en particulier de matériaux destinés à entrer dans la constitution de membranes conductrices de protons pour piles à combustible, telles que les piles fonctionnant à H₂/air ou à H₂/O₂ (connues sous l'abréviation PEMFC signifiant « Proton Exchange Membrane Fuel Cell ») ou fonctionnant au méthanol/air (connues sous l'abréviation DMFC signifiant « Direct Methanol Fuel Cell »), et notamment pour des piles à combustible fonctionnant sur une gamme de températures allant de 0 à 130°C et sur une large gamme d'humidité relative.

Ainsi, le domaine technique de l'invention peut être défini, de manière générale, comme celui des matériaux échangeurs de protons utilisés, notamment, dans le domaine des piles à combustible.

### ETAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le cœur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones ou des polyphénylènes, sur lesquels sont greffés des groupements conducteurs de protons. Dans le cas où ces groupements conducteurs sont des groupements du type acide sulfonique, l'utilisation de ces polymères est, généralement, limitée à des températures inférieures à 80°C et à un degré d'humidité relative élevée.

Dans l'objectif d'augmenter la température d'utilisation de la pile, à savoir une température s'échelonnant de 80 à 130°C, l'utilisation de groupes du type acide phosphonique a été mise en avant. Cependant, l'utilisation exclusive de polymères comprenant uniquement, comme groupes conducteurs de protons, des groupes du type acide phosphonique, peut engendrer des performances moindres à des faibles températures et à des hauts degrés d'humidité relative.

Pour pallier ces inconvénients, des auteurs ont imaginé de procéder à la réalisation d'un mélange de polymères, comprenant, notamment, un premier polymère porteur d'un groupe conducteur de protons du type acide sulfonique et d'un deuxième polymère porteur d'un groupe conducteur de protons du type acide phosphonique, comme décrit dans Thabit et al (J. Mater. Res (2012), 1-11), avec des résultats peu probants quant à la résistance des matériaux obtenus, qui se dégradent rapidement dans un environnement de pile à combustible.

En variante, des membranes présentant des propriétés plus intéressantes en termes de durée de vie sont des membranes obtenues à partir de polymères constitués d'une chaîne principale linéaire perfluorée et de chaînes latérales portant des groupes acide sulfonique. Parmi les plus connues, on peut citer les membranes commercialisées sous la dénomination NAFION® par la société Dupont de Nemours ou sous la dénomination DOW®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût reste prohibitif pour la commercialisation. Enfin, ces membranes présentent une sensibilité à des températures supérieures à 80°C, ce qui rend problématique leur utilisation pour des piles fonctionnant aux alentours de 100°C.

Dans le but d'améliorer la performance des membranes pour des températures supérieures à 80°C, certains auteurs ont pensé à l'incorporation dans celles-ci, en sus d'un polymère comprenant, comme groupes conducteurs de protons, des groupes du type acide sulfonique, des particules porteuses de groupes conducteurs de protons du type acide phosphonique, comme cela est décrit dans Joseph et al. (J. Power Sources, 196 (2011), 7363-7371), qui associe un polymère Nafion® avec des particules de silice porteuses de groupes du type acide phosphonique, avec l'inconvénient majeur, que cette solution est difficilement commercialisable compte tenu des coûts engendrés par l'utilisation du Nafion®. Le document FR2967925 décrit un procédé de fonctionnalisation de particules inorganiques par des polymères.

Aussi, au vu de ce qui précède, il se pose le besoin de concevoir un matériau échangeur de protons qui puissent comporter deux types de groupes échangeurs de protons (par exemple, un groupe sulfonique et un groupe phosphonique) alliant les avantages de ces deux types de groupes et permettant d'éviter l'utilisation de polymères échangeurs de protons trop onéreux, comme peut l'être le Nafion®.

Au vu de ce qui existe et dans une perspective d'amélioration, les auteurs de la présente invention se sont ainsi fixé pour objectif de proposer un procédé de préparation de particules inorganiques fonctionnalisées par des composés organiques porteurs d'au moins deux groupes échangeurs de protons, qui présentent les avantages suivants :
*la possibilité de moduler la nature des groupements conducteurs de protons ainsi que leur ratio au sein du polymère ;
*la possibilité également d'accéder à des particules présentant une capacité d'échange ionique élevée ; et
*la possibilité d'utiliser lesdites particules sur une large gamme de températures et d'humidité relative.

### EXPOSÉ DE L'INVENTION

Ainsi, l'invention a trait, selon un premier objet, à un procédé de fonctionnalisation de particules inorganiques par des polymères comprenant au moins deux types de motifs répétitifs différents, dit premier motif répétitif et deuxième motif répétitif, porteurs chacun d'un groupe échangeur de protons différent, ledit procédé comprenant les étapes suivantes :
a) une étape de greffage covalent de particules inorganiques par un composé organique, par mise en contact desdites particules avec un agent de couplage comprenant au moins un groupe apte à se lier, de manière covalente, aux particules, moyennant quoi il résulte des particules inorganiques liées, de manière covalente, à un composé organique, qui est un reste dudit agent de couplage, ledit reste comprenant, en outre, un groupe apte à réagir, de manière covalente, avec un groupe fonctionnel du polymère issu de l'étape d) ;
b) une étape de polymérisation anionique d'au moins deux types de monomères, à savoir un premier monomère et un deuxième monomère différents l'un de l'autre, porteurs chacun d'au moins un groupe précurseur d'un groupe échangeur de protons différent, moyennant quoi il résulte un polymère comprenant au moins deux types de motifs répétitifs différents porteurs chacun d'un groupe précurseur d'un groupe échangeur de protons différent et comportant une extrémité anionique ;
c) une étape de réaction de terminaison de la polymérisation anionique de l'étape b) par mise en contact du polymère issu de cette étape avec un agent de terminaison comportant un groupe (dit groupe X) apte à réagir avec l'extrémité anionique dudit polymère pour former une liaison covalente, moyennant quoi il résulte un polymère comprenant au moins deux types de motifs répétitifs différents porteurs chacun d'un groupe précurseur d'un groupe échangeur de protons différent et comportant, à l'une de ses extrémités, un reste dudit agent de terminaison ;
d) une étape de fonctionnalisation du polymère obtenu à l'issue de l'étape c) par mise en contact dudit polymère issu de l'étape c) avec un agent de fonctionnalisation comportant un groupe (dit groupe Z) apte à réagir avec un groupe (dit groupe W) dudit reste d'agent de terminaison pour former un groupe fonctionnel apte à réagir, de manière covalente avec les particules obtenues à l'étape a), moyennant quoi il résulte un polymère comprenant au moins deux types de motifs répétitifs différents porteurs chacun d'un groupe précurseur d'un groupe échangeur de protons différent et comportant, à l'une de ses extrémités, ledit groupe fonctionnel lié, de manière covalente, au reste dudit agent de terminaison ;
e) une étape de mise en contact des particules obtenues à l'étape a) avec les polymères obtenus à l'étape d) engendrant une réaction covalente entre le groupe fonctionnel et le groupe du reste d'agent de couplage défini à l'étape a), moyennant quoi il résulte des particules inorganiques fonctionnalisées, de manière covalente, par des polymères comprenant au moins deux types de motifs répétitifs différents porteurs chacun d'un groupe précurseur d'un groupe échangeur de protons différent ;
f) une étape de transformation du ou des groupes précurseurs en groupes échangeurs de protons.

Avant d'entrer plus en détail dans la présente description, nous précisons les définitions suivantes.

Par polymère, on entend, classiquement, au sens de l'invention, un composé constitué par l'enchaînement d'une ou plusieurs motifs répétitifs, en l'occurrence, dans notre cas de figure, par l'enchaînement d'au moins deux types de motifs répétitifs différents, dit premier motif répétitif et deuxième motif répétitif porteurs chacun d'un groupe échangeur de protons différent, lorsque l'on évoque le polymère obtenu à l'issue de l'étape e).

Par motif répétitif, on entend, classiquement, au sens de l'invention, un groupe bivalent (c'est-à-dire un groupe formant pont) issu d'un monomère après polymérisation de celui-ci.

Par agent de couplage, on entend, classiquement, au sens de l'invention, un composé organique apte à réaliser le couplage covalent (soit, en d'autres termes, la formation d'une liaison covalente) entre le polymère et les particules, ce qui signifie, en d'autres termes que l'agent de couplage comprend, d'une part, un groupe apte à se lier, de manière covalente, à la surface desdites particules (pour former des particules greffées, lors de l'étape a), par un composé organique, qui est un reste dudit agent de couplage (dit premier reste d'agent de couplage), c'est-à-dire ce qu'il subsiste de l'agent de couplage après réaction de l'un de ses groupes avec les particules, pour former une liaison covalente) et, d'autre part, un groupe apte à réagir, de manière covalente, avec un groupe fonctionnel du polymère issu de l'étape d), moyennant quoi, dans le contexte de l'invention et à l'issue du procédé de l'invention, le polymère issu de l'étape d) se retrouve greffé à la surface des particules via un reste d'agent de couplage (dit second reste d'agent de couplage) lié lui-même, de manière covalente, à la surface des particules, ce reste d'agent de couplage constituant ainsi un groupe organique formant pont (ou bivalent) entre les particules et le polymère. En d'autres termes, ce second reste d'agent de couplage, à l'issue du procédé, résulte à la fois de la réaction de l'agent de couplage avec les particules pour former une liaison covalente et de la réaction du premier reste d'agent de couplage ainsi lié avec un groupe fonctionnel du polymère préparé à l'étape d) pour former une liaison covalente avec celui-ci.

Par agent de terminaison, on entend, classiquement, au sens de l'invention, un composé organique apte à stopper le processus de propagation de polymérisation (en l'occurrence, ici, une polymérisation anionique) dans une chaîne polymérique, ce qui signifie, en d'autres termes que, une extrémité réactive porteuse d'une charge négative du polymère préparé à l'étape b) (dite, l'extrémité anionique) réagit, de manière covalente, avec l'un des groupes de l'agent de terminaison (dit groupe X), moyennant quoi, dans le contexte de l'invention, il résulte un polymère comprenant au moins deux types de motifs répétitifs différents porteurs chacun d'un groupe précurseur d'un groupe échangeur de protons différent et comportant, à l'une de ses extrémités, un reste dudit agent de terminaison (c'est-à-dire ce qu'il subsiste de l'agent de terminaison après réaction de l'un de ses groupes avec l'extrémité anionique du polymère, pour former une liaison covalente).

Par agent de fonctionnalisation, on entend classiquement, au sens de l'invention, un composé organique apte à réagir, via l'un de ses groupes (dit groupe Z) avec un groupe (dit groupe W) dudit reste d'agent de terminaison déjà lié au polymère, pour former, sur le reste d'agent de terminaison, un groupe organique fonctionnel apte à réagir, de manière covalente, avec les particules obtenues à l'étape a).

Ainsi, grâce à la mise en œuvre du procédé de l'invention, il est ainsi possible d'obtenir des particules inorganiques conductrices de protons avec des propriétés modulables en ce qui concerne la capacité d'échange ionique, en jouant d'une part sur la quantité d'agent de couplage fonctionnalisant les particules, la quantité de motifs répétitifs porteurs d'au moins un groupe échangeur de protons ainsi que le type et le ratio entre les deux types de motifs répétitifs présents dans les polymères préparés à l'étape b). En jouant sur ces trois aspects, il est ainsi possible d'accéder à des particules pouvant présenter une capacité d'échange ionique très élevée et pouvant être notamment supérieure à 5 méq.g⁻¹.

Comme mentionné ci-dessus, le procédé de l'invention comprend, en premier lieu, une étape de greffage covalent de particules inorganiques par un composé organique, par mise en contact desdites particules avec un agent de couplage comprenant au moins un groupe apte à se lier, de manière covalente, aux particules, moyennant quoi il résulte des particules inorganiques liées, de manière covalente, à un composé organique, qui est un reste dudit agent de couplage, ledit reste comprenant, en outre, un groupe apte à réagir, de manière covalente, avec un groupe fonctionnel du polymère issu de l'étape d).

Lesdites particules inorganiques peuvent être des particules de zéolithes, des particules de phosphates de zirconium, des particules de phosphonates de zirconium, des particules d'argiles ou des particules d'oxydes telles que la silice, l'alumine, la zircone, l'oxyde de titane.

En particulier, les particules inorganiques peuvent être des particules d'oxyde, telles que des particules de silice.

Avantageusement, les particules sont des particules hydrophiles comportant à leur surface des groupes hydrophiles, tels que des groupes -OH, ces groupes pouvant participer à la réaction de greffage covalent des agents de couplage susmentionnés à la surface desdites particules.

Des particules comprenant des groupes hydrophiles à leur surface, tels que des groupes -OH peuvent être des particules d'oxyde, telles que des particules de silice, ces particules comprenant intrinsèquement de tels groupes dès lors qu'elles sont en contact avec l'humidité de l'air. La présence de tels groupes permet notamment le greffage covalent de l'agent de couplage sur les particules.

Concernant l'agent de couplage, celui-ci doit comporter au moins un groupe apte à réagir avec au moins un groupe présent sur les particules pour former une liaison covalente.

En particulier, lorsque les particules comprennent à leur surface des groupes -OH, le ou les groupes de l'agent de couplage aptes à se lier à la surface des particules pour former une liaison covalente, peuvent être choisis parmi les groupes de formules suivantes :
- COOR¹ avec R¹ représentant un atome d'hydrogène, un groupe alkyle comprenant de 1 à 30 atomes de carbone ou un groupe phényle ;
- COCl ;
- COCH₂CO-R¹ avec R¹ représentant un atome d'hydrogène, un groupe alkyle comprenant de 1 à 30 atomes de carbone ou un groupe phényle ;
- PO(OH)₂, -PO(OR²)(OH) ou -PO(OR²)(OR³) avec R² et R³, identiques ou différents, représentant un groupe alkyle comprenant de 1 à 30 atomes de carbone ou un groupe phényle ;
- CO(NHOH) ;
- M(OR⁴)ₙ₋ₓ₋₁Zₓ avec x étant un entier allant de 0 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- OH;
et les combinaisons de ceux-ci.

Pour le groupe de formule -M(OR⁴)ₙ₋ₓ₋₁Zₓ telle que définie précédemment, M peut représenter un élément métallique, tel qu'un élément de transition de degré d'oxydation n donné ou un élément métalloïde tel que Si, Ge, Te de degré d'oxydation n donné, les degrés d'oxydation envisageables pour chaque élément métallique ou métalloïde étant connus de l'homme du métier.

A titre d'exemple de groupes conformes à cette définition, on peut citer le groupe de formule -Si(OR⁴)₃₋ₓZₓ avec x étant un entier allant de 0 à 3, Z et R⁴ ayant les mêmes définitions que celles données ci-dessus.

Plus particulièrement, un groupe approprié peut être un groupe alcoxysilane, tel qu'un groupe triméthoxysilane, un groupe triéthoxysilane.

L'agent de couplage comprend, également, au moins un groupe apte à réagir avec un groupe fonctionnel du polymère préparé à l'étape d) pour former une liaison covalente avec celui-ci, cette liaison covalente s'établissant entre ledit polymère et le reste d'agent de couplage lié à la particule.

En particulier, un tel groupe de l'agent de couplage peut être un groupe nucléophile (notamment, lorsque le groupe fonctionnel du polymère est un groupe électrophile), ce groupe nucléophile pouvant être choisi parmi les groupes de formules suivantes :
- NH(R⁵) avec R⁵ représentant un atome d'hydrogène, un groupe alkyle comprenant de 1 à 30 atomes de carbone ou un groupe phényle ;
- OH ;
- MgX avec X représentant un atome d'halogène.

Plus particulièrement, un groupe approprié peut être un groupe amine, tel qu'un groupe amine primaire, un groupe amine secondaire.

Des agents de couplage conformes à l'invention peuvent être des composés comprenant au moins un groupe alcoxysilane (en tant que groupe apte à se greffer aux particules inorganiques, telles que des particules de silice) et au moins un groupe -NH(R⁵) tel que défini ci-dessus (en tant que groupe apte à assurer le couplage avec le polymère préparé en d), et plus spécifiquement, il peut s'agir de composés comprenant au moins un groupe alcoxysilane et au moins un groupe -NH(R⁵), ces deux groupes pouvant être séparés l'un de l'autre par un groupe formant pont (ou bivalent) alkylène, par exemple, un groupe propylène.

A titre d'exemples de tels composés, on peut citer le 3-aminopropyltriméthoxysilane, le 3-aminopropyltriéthoxysilane, lesquels répondent à la formule générale suivante : 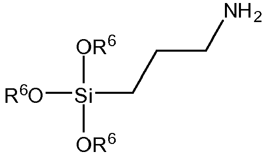 dans laquelle R⁶ est un groupe méthyle (pour le 3-aminopropyltriméthoxysilane) ou un groupe éthyle (pour le 3-aminopropyltriéthoxysilane).

En deuxième lieu, le procédé comprend une étape de polymérisation anionique d'au moins deux types de monomères différents l'un de l'autre, à savoir un premier monomère et un deuxième monomère porteurs chacun d'au moins un groupe précurseur d'un groupe échangeur de protons différent.

Le groupe précurseur d'un groupe échangeur de protons est un groupe susceptible d'être transformé par une réaction chimique appropriée en un groupe échangeur de protons, lequel groupe échangeur de protons peut être un groupe acide carboxylique -COOH, un groupe acide sulfonique -SO₃H ou un groupe acide phosphonique -PO₃H₂, ces groupes pouvant exister éventuellement sous forme de sels et, de préférence, un groupe acide sulfonique et un groupe phosphonique, éventuellement sous forme de sels, car les particules préparées conformément à l'invention sont, de préférence, des particules inorganiques fonctionnalisées par des polymères comprenant au moins deux types de motifs répétitifs différents, dit premier motif répétitif et deuxième motif répétitif porteurs chacun d'un groupe échangeur de protons différent, qui sont, respectivement, un groupe acide sulfonique et un groupe acide phosphonique, éventuellement sous forme de sels.

Dans le cas où les groupes échangeurs de protons sont des groupes acide sulfonique, acide carboxylique ou acide phosphonique, éventuellement sous forme d'un sel, les groupes précurseurs de tels groupes peuvent être avantageusement des groupes esters d'acide carboxylique, esters d'acide sulfonique ou esters d'acide phosphonique, ce qui signifie que le premier monomère et le deuxième monomère peuvent être porteurs d'un groupe ester d'acide carboxylique, d'un groupe ester sulfonique ou d'un groupe ester phosphonique, sachant que le premier monomère et le deuxième monomère doivent être porteurs d'un groupe précurseur d'un groupe échangeur de protons différent l'un de l'autre.

Une réaction appropriée pour transformer ces groupes précurseurs en groupes échangeurs de protons du type acide carboxylique, acide sulfonique ou acide phosphorique est une réaction d'hydrolyse, par exemple, une hydrolyse en milieu acide.

Spécifiquement, le premier monomère et le deuxième monomère utilisés dans l'étape b) peuvent être :
*des monomères éthyléniques porteurs d'un groupe ester d'acide carboxylique ;
*des monomères éthyléniques porteurs d'un groupe ester d'acide sulfonique ; et
*des monomères éthyléniques porteurs d'un groupe ester d'acide phosphonique, étant entendu que le premier monomère et le deuxième monomère sont de nature différente, puisqu'ils sont porteurs tous deux d'un groupe précurseur d'un groupe échangeur de protons différent.

Comme exemples de monomères éthyléniques porteurs d'un groupe ester d'acide carboxylique, on peut citer des monomères de formule suivante : 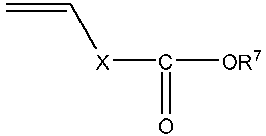 dans laquelle :
- X est une liaison simple ou un groupe benzyle ;
- R⁷ est un groupe alkyle.

Comme exemples de monomères éthyléniques porteurs d'un groupe ester d'acide sulfonique, on peut citer les monomères de formule suivante : 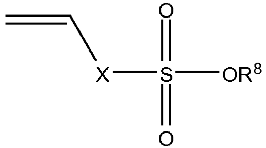 dans laquelle :
- X est une liaison simple ou un groupe benzyle ;
- R⁸ est un groupe alkyle.

Comme exemples de monomères éthyléniques porteurs d'un groupe ester d'acide phosphonique, on peut citer les monomères de formule suivante : 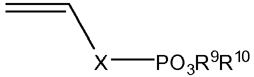 dans laquelle :
*X est une liaison simple ou un groupe benzyle ;
*R⁹ et R¹⁰ représentent, indépendamment, l'un de l'autre, un groupe alkyle.

Lorsque X est une liaison simple, on peut citer comme exemples spécifiques de monomères, le vinylsulfonate de méthyle (R⁸ représentant alors un groupe méthyle), le vinylsulfonate d'éthyle (R⁸ représentant alors un groupe éthyle), le vinylsulfonate de propyle (R⁸ représentant alors un groupe propyle), le vinylphosphonate de diméthyle (R⁹ et R¹⁰ représentant alors un groupe méthyle), le vinylphosphonate de diéthyle (R⁹ et R¹⁰ représentant alors un groupe éthyle), le vinylphosphonate de diisopropyle (R⁹ et R¹⁰ représentant alors un groupe diisopropyle).

Avantageusement, le premier monomère et le deuxième monomère porteurs chacun d'au moins un groupe précurseur d'un groupe échangeur de protons différent sont respectivement, un monomère porteur d'un groupe précurseur d'un groupe acide sulfonique et un monomère porteur d'un groupe précurseur d'un groupe acide phosphonique.

Dans ce cas, le groupe précurseur d'un groupe acide phosphonique est, avantageusement, un groupe ester d'acide phosphonique et le groupe précurseur d'un groupe acide sulfonique est, avantageusement, un groupe ester d'acide sulfonique.

A titre d'exemple, le premier monomère peut être un monomère sulfoné, par exemple, un monomère éthylénique comprenant un groupe ester d'acide sulfonique de formule générale telle que définie ci-dessus, tel que le vinylsulfonate d'éthyle et le deuxième monomère peut être un monomère phosphoné, par exemple, un monomère éthylénique comprenant un groupe ester d'acide phosphonique de formule générale telle que définie ci-dessus, tel que du vinylphosphonate de diéthyle.

L'étape de polymérisation anionique b) est réalisée, classiquement, en présence d'un initiateur de polymérisation, qui est un composé basique, qui peut être choisi parmi les composés alkyllithiens, tels que le butyllithium (symbolisé BuLi).

Les masses moléculaires moyennes en nombre (Mn) des polymères sont généralement comprises entre 1000 et 1 000 000 et, plus précisément, entre 3000 et 100 000.

Les rapports massiques entre le premier monomère et le deuxième monomère sont généralement compris entre 1/99 et 99/1 et, plus précisément, entre 20/80 et 80/20, lorsque le premier monomère est un monomère sulfoné et le deuxième monomère est un monomère phosphoné.

Une fois l'étape de polymérisation anionique b) réalisée, le procédé comprend une étape de réaction de terminaison de la polymérisation anionique de l'étape b) par mise en contact du polymère issu de cette étape avec un agent de terminaison comportant un groupe (dit groupe X) apte à réagir avec l'extrémité anionique dudit polymère pour former une liaison covalente, cette liaison covalente s'établissant entre ledit polymère et l'agent de terminaison, la formation de la liaison covalente pouvant se faire selon un mécanisme de substitution nucléophile tel qu'illustré par le schéma réactionnel suivant : 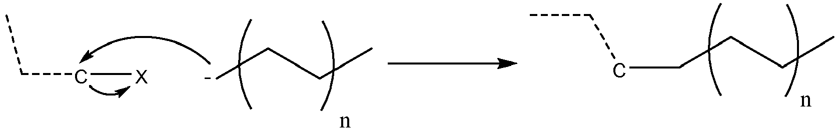 le groupement -C-X lié à la liaison en pointillés illustrant schématiquement le reste d'agent de terminaison, le composé porteur d'une charge négative à son extrémité illustrant schématiquement le polymère préparé à l'étape b).

Pour assurer la terminaison d'une polymérisation anionique, les agents de terminaison peut ainsi comprendre un groupe X de formule -C-X', X' étant un atome et/ou groupe électroattracteur, et en particulier un atome d'halogène.

Des agents de terminaison utilisés conformément à l'invention comprennent, en outre, au moins un groupe (dit groupe W) apte à réagir avec un agent de fonctionnalisation de l'étape d), ce groupe W pouvant être un groupe éthylénique, tel qu'un groupe répondant à la formule -CR¹¹=CR¹²R¹³, avec R¹¹, R¹² et R¹³ représentant, indépendamment, l'un de l'autre, un atome d'hydrogène ou un groupe alkyle.

Plus spécifiquement, des agents de terminaison utilisés conformément à l'invention peuvent être des composés halogénoallyles, un composé de ce type étant le bromure d'allyle de formule suivante :

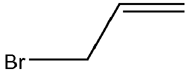

Une fois la réaction de termination effectuée, le procédé de l'invention comprend une étape de fonctionnalisation du polymère obtenu à l'issue de l'étape c) par mise en contact dudit polymère issu de l'étape c) avec un agent de fonctionnalisation comportant un groupe (dit groupe Z) apte à réagir avec un groupe (dit groupe W) dudit reste d'agent de terminaison pour former un groupe fonctionnel sur le polymère au niveau du reste d'agent de terminaison, ce groupe fonctionnel étant choisi de sorte à pouvoir réagir avec un groupe du reste d'agent de couplage, pour former une liaison covalente. Ce groupe fonctionnel peut être un groupe électrophile, tel qu'un groupe époxyde apte à réagir, par exemple, avec un groupe nucléophile porté par le reste d'agent de couplage, comme un groupe amine.

Aussi, cette étape de fonctionnalisation peut être une étape classique de la chimie organique à la portée de l'homme du métier, et plus spécifiquement, une réaction d'addition nucléophile du groupe W du reste d'agent de terminaison avec le groupe Z de l'agent de fonctionnalisation.

Ainsi, à titre d'exemple, lorsque le groupe W est un groupe éthylénique, l'agent de fonctionnalisation peut être un agent d'époxydation pour former un groupe fonctionnel époxyde après réaction avec le groupe W.

Plus spécifiquement, un tel agent peut comporter, comme groupe Z, un groupe peracide, un agent de ce type pouvant être un composé perbenzoïque, tel que l'acide orthochloroperbenzoïque de formule suivante :

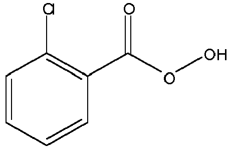

Après cette étape d), les particules fonctionnalisées obtenues à l'issue de l'étape a) et les polymères obtenus à l'issue de l'étape d) sont mis en contact lors de l'étape e), engendrant une réaction covalente entre le groupe fonctionnel du reste d'agent de fonctionnalisation et le groupe du reste d'agent de couplage défini à l'étape a), moyennant quoi il résulte des particules inorganiques fonctionnalisées, de manière covalente, par des polymères comprenant au moins deux types de motifs répétitifs différents porteurs chacun d'un groupe précurseur d'un groupe échangeur de protons différent.

Ainsi, lorsque le reste d'agent de couplage comporte un groupe amine et que le groupe fonctionnel du reste d'agent de fonctionnalisation est un groupe époxyde, la réaction covalente entre ces deux groupes consiste en une réaction d'ouverture du cycle époxyde par addition nucléophile du groupe amine sur un carbone du groupe époxyde, formant ainsi un groupe formant pont de formule -NH-CH₂-CH(OH)-, lorsque le groupe amine est un groupe -NH₂.

Les monomères de l'étape b (et par voie de conséquence les polymères résultant de la polymérisation de ces monomères) comportant un groupe précurseur d'un groupe échangeur de protons, le procédé de l'invention comprend une étape de transformation de ces groupes précurseurs en groupes échangeurs de protons (étape f).

Cette étape de transformation consiste à mettre en œuvre une étape classique de la chimie organique à la portée du l'homme du métier.

A titre d'exemple, lorsque les monomères de l'étape b) (et ainsi que les polymères résultant de la polymérisation de ces monomères) comportent un groupe précurseur du type ester d'acide carboxylique, d'acide sulfonique ou d'acide phosphonique, l'étape de transformation peut consister en une simple étape d'hydrolyse, par exemple, en milieu acide.

Un procédé spécifique conforme à l'invention est un procédé, dans lequel :
- les particules sont des particules de silice ;
- l'agent de couplage est un composé aminoalcoxysilane, tel que le 3-aminopropyltriméthoxysilane ;
- le premier monomère et le deuxième monomère sont, respectivement, le vinylsulfonate d'éthyle et le vinylphosphonate de diéthyle ;
- l'agent de terminaison est un composé halogénoallyle, tel que le bromure d'allyle ;
- l'agent de fonctionnalisation est un composé peracide, tel que l'acide orthochloroperbenzoïque.

L'invention a aussi pour objet des particules susceptibles d'être obtenues par le procédé tel que décrit précédemment.

De telles particules se présentent sous forme de particules fonctionnalisées par des chaînes polymériques comportant deux types de motifs répétitifs comprenant deux types de groupes échangeurs de protons différents, ces chaînes étant liées aux particules via un groupe espaceur, qui est un reste d'agent de couplage lié, de manière covalente, à un reste d'agent fonctionnalisé lié, de manière covalente, à un reste d'agent de terminaison lequel est enfin lié, de manière covalente aux chaînes polymères.

A titre d'exemple, lorsque les particules sont des particules de silice, l'agent de couplage est le 3-aminopropyltriméthoxysilane, l'agent de terminaison est le bromure d'allyle et l'agent de fonctionnalisation est l'acide orthochloroperbenzoïque, le premier monomère et le deuxième monomère sont, respectivement, le vinylsulfonate d'éthyle et le vinylphosphonate de diéthyle, les particules résultantes sont des particules de silice, auxquelles sont liés, de façon covalente, le groupe formant pont de formule suivante : 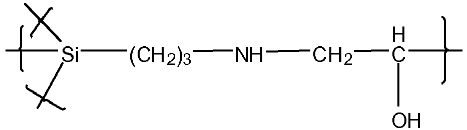 via un atome de silicium (comme illustré sur la formule ci-dessus), ces restes étant liés, via le groupe -CH(OH)-) à des polymères comprenant au moins deux types de motifs répétitifs différents, dit premier motif répétitif et deuxième motif répétitif porteurs chacun d'un groupe échangeur de protons différent, qui sont, respectivement, un groupe acide sulfonique et un groupe acide phosphonique, éventuellement sous forme de sels, ces polymères pouvant être issus de la polymérisation du vinylphosphonate de diéthyle et du vinylsulfonate d'éthyle suivie d'une hydrolyse.

Lesdites particules présentent d'excellentes propriétés de conduction protonique, et donc de mobilité ionique.

Ces particules peuvent donc être utilisées dans la constitution de matériaux composites conducteurs de protons, lesquels matériaux composites peuvent entrer dans la constitution de membranes échangeuses de protons, en particulier de membranes échangeuses de protons destinées à entrer dans la constitution de cellules de piles à combustible.

L'invention a donc également pour objet un matériau composite conducteur comprenant une matrice polymérique au sein de laquelle sont dispersées les particules telles que définies ci-dessus.

En particulier, la matrice polymérique peut être une matrice en un polymère non conducteur de protons, la conductivité protonique étant apportée par les particules obtenues par le procédé conforme à l'invention.

De tels polymères peuvent être des polymères fluorés tels que le polytétrafluoroéthylène (PTFE), le polyfluorure de vinylidène (PVDF), le copolymère tétrafluoroéthylène/éthylène (ETFE) et leurs dérivés. Les polymères fluorés ont notamment pour avantage de présenter une bonne tenue mécanique ainsi qu'une bonne résistance chimique.

De tels polymères peuvent être également des polymères aromatiques ou hétérocycliques. On précise que, par polymères aromatiques ou hétérocycliques, on entend un polymère dont la chaîne principale comprend un enchaînement de motifs aromatiques (par exemple, phénylène) ou hétérocycliques (par exemple, benzimidazole). Parmi ces polymères, on peut citer les polysulfones, les polyaryléthercétones, les polyimides, les polybenzimidazoles, les polyoxydes de phénylène, les polycarbonates. De tels polymères ont pour particularité de conférer au matériau composite, dans lequel ils sont intégrés, une rigidité et une résistance chimique et thermique élevées, sans nécessiter l'incorporation au matériau composite d'apport de renfort ou de charge.

Le matériau composite selon l'invention se présente avantageusement sous forme d'un film, présentant par exemple une épaisseur de 10 à 500 µm.

Les matériaux composites susmentionnés peuvent être préparés selon deux procédés alternatifs.

Selon une première alternative, le procédé comprend successivement les étapes suivantes :
- mélanger, en l'absence de solvant, un ou plusieurs polymères constitutifs de la matrice avec des particules telles que définies ci-dessus ;
- former à partir du mélange obtenu le matériau composite par voie fondue.

En variante, le procédé peut comprendre successivement les étapes suivantes :
- fondre, en l'absence de solvant, un ou plusieurs polymères constitutifs de la matrice ;
- incorporer, dans le polymère ou le mélange de polymères fondus des particules telles que définies ci-dessus.

Selon la première alternative, le traitement thermique comprend généralement une étape de chauffage du mélange obtenu après la première étape à une température pouvant aller de 100°C à 300°C, de manière à obtenir un mélange fondu et une étape simultanée ou consécutive de mise en forme du mélange, afin d'obtenir le matériau composite voulu, cette mise en forme pouvant consister en un calandrage.

Parmi les traitements thermiques par voie fondue appropriés, on peut citer l'extrusion.

Selon une seconde alternative, le procédé comprend successivement les étapes suivantes :
- une étape de mélange d'une solution comprenant des particules telles que définies précédemment et un ou plusieurs solvants avec un ou plusieurs polymères constitutifs de la matrice ;
- une étape de formation, à partir du mélange obtenu, d'un matériau composite par évaporation du ou des solvant(s).

Selon cette seconde alternative, la solution peut être coulée sur un support, par exemple, en verre, en alumine ou encore en polyéthylène, puis le matériau sous forme de film est formé par évaporation du ou des solvants. A l'issue de ce procédé, on obtient un matériau sous forme de film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques, tels que le diméthylformamide, le diméthylacétamide, le tétrahydrofurane, le diméthylsulfoxyde, ou encore des solvants chlorés comme le chloroforme, mais aussi des solvants tels que les alcools, les éthers, les cétones.

Du fait de leurs propriétés mécaniques, ces matériaux peuvent être mis en œuvre efficacement et conduire à des films minces suffisamment résistants pour être utilisés comme membranes pour pile à combustible.

Ces membranes présentent avantageusement une imperméabilité suffisante aux gaz réactants (tels que H₂ et O₂) et sont stables, de préférence, jusqu'à une température d'au moins 150°C.

De préférence, le matériau composite constitutif de la membrane comprend de 5 à 70% en masse de particules telles que définies précédemment, lorsque la matrice polymère comprend un ou plusieurs polymères non conducteurs de protons.

On précise que les % ci-dessus sont exprimés par rapport à la masse totale du matériau composite.

Ainsi, l'invention a trait également à un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

L'invention va maintenant être décrite à la lumière des exemples donnés ci-dessous donnés à titre illustratif et non limitatif.

### EXPOSÉ DÉTAILLÉ DE MODES DE RÉALISATION PARTICULIERS

### EXEMPLE 1

Cet exemple illustre la préparation de particules de silice fonctionnalisées conformes à l'invention comprenant les étapes suivantes :
- une étape de greffage de particules de silice par du 3-aminopropytriméthoxysilane (étape a) ;
- une étape de polymérisation anionique du vinylphosphonate de diéthyle et du vinylsulfonate d'éthyle (étape b) ;
- une étape de réaction de terminaison de la polymérisation engagée à l'étape b) (étape c) ;
- une étape de fonctionnalisation des polymères obtenus en c) (étape d) ;
- une étape de réaction du polymère obtenu à l'étape d) avec les particules de silice obtenues à l'étape a) (étape e).

### Etape a- Etape de greffage de particules de silice par du 3-aminopropyltriméthoxysilane

Le schéma réactionnel est le suivant :

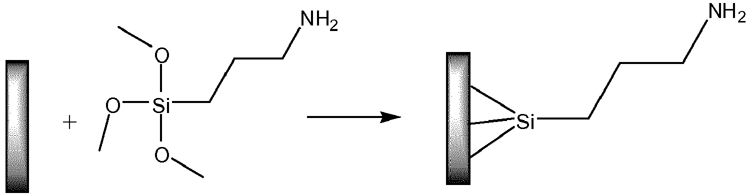

Sur ce schéma réactionnel, le trait plein vertical représente, de manière symbolique, une particule de silice.

Le protocole opératoire est le suivant :
Une suspension de 5 g de particules de silice d'un diamètre moyen de particules de 7 nm dans 400 mL de toluène est mise à reflux sous agitation magnétique et sous ultrasons pendant 1 heure. Après addition de 7 mL de 3-aminopropyltriméthoxysilane (commercialisé par la société Aldrich) à la dispersion, le mélange est mis à réagir sous agitation pendant 12 heures à reflux. Les particules ainsi fonctionnalisées sont ensuite isolées et lavées à l'éthanol, afin d'éliminer le 3-aminopropyltriméthoxysilane non greffé. La poudre obtenue est séchée sous vide à 100°C pendant 12 heures.

### Etape b-Polymérisation anionique du vinylphosphonate de diéthyle et du vinylsulfonate d'éthyle

Le schéma réactionnel est le suivant : 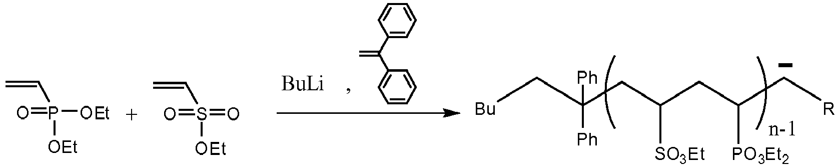 dans lequel Bu représente un groupe n-butyle, Et représente un groupe éthyle, Ph représente un groupe phényle, R représente un groupe -SO₃Et ou -PO₃Et₂, (n-1) représente le nombre de répétition des motifs pris entre parenthèses et le train plein horizontal représente une charge négative.

Le protocole opératoire est le suivant.

Dans un réacteur de 250 mL, équipé d'une entrée gaz/vide, préalablement séché à au moins 100°C pendant 24 heures, sont introduits 100 mL de tétrahydrofurane (THF) anhydre. La solution est mise sous agitation magnétique, refroidie à -78°C puis maintenue à cette température. Le système est dégazé par au moins 7 cycles vide/argon. Le système est maintenu sous un balayage d'argon. On introduit 0,5 mmol de diphényléthylène (symbolisé DPE) puis du n-butyllithium (BuLi) jusqu'à l'obtention d'un couleur rouge. Le diphényléthylène consiste en un co-amorceur formant un anion stable et encombré, ce co-amorceur n'homopolymérisant pas.

Après 15 minutes, on introduit dans le mélange réactionnel 10 mmol (1,64 g) de vinylphosphonate de diéthyle (symbolisé DEVP) et 10 mmol (1,36 g) de vinylsulfonate d'éthyle. La coloration disparaît au profit d'une légère coloration jaune. Le mélange réactionnel est conservé sous agitation à une température inférieure à -70°C pendant 1H30.

### Etape c- Etape de réaction de terminaison de la polymérisation engagée à l'étape b)

Le schéma réactionnel est le suivant : 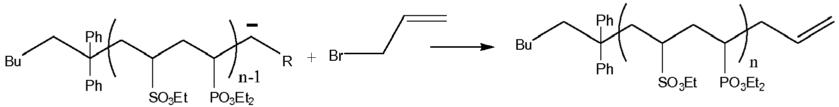 dans lequel Bu représente un groupe n-butyle, Et représente un groupe éthyle, Ph représente un groupe phényle, R représente un groupe -SO₃Et ou -PO₃Et₂ et (n-1) et n représentent les nombres de répétition des motifs pris entre parenthèses et le train plein horizontal représente une charge négative.

Le protocole opératoire est le suivant.

A la suite de la réaction de polymérisation anionique, 0,06 mmol (0,0072 g) de bromure d'allyle sont injectés dans le réacteur, le tout sous atmosphère d'argon. Le milieu réactionnel est conservé sous agitation pendant 1 heure. Le polymère résultant est alors isolé par évaporation du milieu réactionnel. Le rendement massique de la réaction de polymérisation est supérieur à 95% avec une masse finale de 2,9 g de polymère. La masse molaire théorique et le degré de polymérisation de ce polymère sont respectivement de 6000 g.mol⁻¹ et de 40.

### Etape d- Réaction de fonctionnalisation du polymère obtenu en c)

Le schéma réactionnel est le suivant : 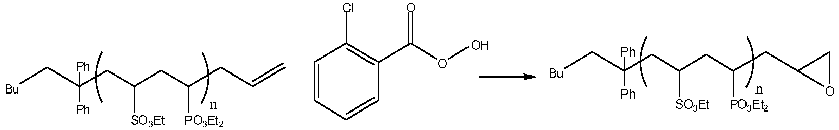 dans lequel Bu représente un groupe n-butyle, Et représente un groupe éthyle, Ph représente un groupe phényle, n représente les nombres de répétition des motifs pris entre parenthèses.

Le protocole opératoire est le suivant.

Dans un réacteur de 100 mL, le polymère obtenu à l'étape c) est dissous dans 50 mL de dichlorométhane. Puis 0,07 mol (0,012 g) d'acide chloroperbenzoïque sont ajoutés dans le mélange réactionnel, le tout sous atmosphère d'argon, en prenant soin de refroidir ledit mélange. Le mélange est ensuite conservé sous agitation à une température de 40°C pendant 15 heures. Le polymère ainsi fonctionnalisé est alors isolé par évaporation du mélange réactionnel.

### Etape e- Etape de réaction du polymère obtenu à l'étape d) avec les particules de silice obtenues à l'étape a)

Le schéma réactionnel est le suivant : 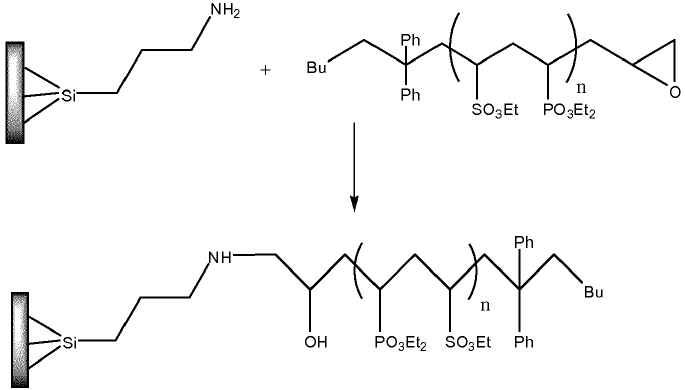 dans lequel Bu représente un groupe n-butyle, Et représente un groupe éthyle, Ph représente un groupe phényle, n représente les nombres de répétition des motifs pris entre parenthèses.

Le protocole opératoire est le suivant.

Dans un réacteur de 250 mL, 0,5 g de particules de silice fonctionnalisées à l'étape a) sont dispersées dans 100 mL de diméthylsulfoxyde sous agitation magnétique. Ensuite, 2 g de polymère obtenu à l'étape d) sont ajoutés dans le mélange réactionnel. Le mélange réactionnel est ensuite conservé sous agitation à une température de 50°C pendant 2 heures. Les particules greffées sont isolées et lavées, afin d'éliminer le polymère non greffé sur les particules. La poudre obtenue est ensuite séchée à 100°C pendant 24 heures sous vide. Après séchage, les particules greffées sont hydrolysées dans une solution d'acide chlorhydrique à reflux pendant 7 jours.

Une analyse thermogravimétrique des particules greffées permet de déterminer un taux de greffage de l'ordre de 35%, ce qui correspond à une capacité d'échange ionique théorique de 3,24 méq.g⁻¹.

### EXEMPLE 2

Cet exemple illustre la préparation de particules de silice fonctionnalisées conformes à l'invention selon un protocole similaire à celui de l'exemple 1, si ce n'est les paramètres opératoires suivants :
- dans l'étape b), sont introduites, respectivement, 14 mmol (2,29 g) de vinylphosphonate de diéthyle et 6 mmol (0,81 g) de vinylsulfonate d'éthyle ;
- à l'issue de l'étape c), il est obtenu un rendement massique de réaction de polymérisation supérieur à 96% avec une masse finale de 2,97 g de polymère, ainsi qu'une masse molaire théorique et un degré de polymérisation de ce polymère, respectivement de 6200 g.mol⁻¹ et de 40.

### EXEMPLE 3

Cet exemple illustre la préparation d'un matériau composite à partir de particules préparées selon l'exemple 1.

Pour ce faire, une suspension de 1,3 g de particules fonctionnalisées dans 20 g de diméthylsulfoxyde est homogénéisée sous agitation magnétique pendant 12 heures à 50°C, avant d'ajouter 0,7 g de polyfluorure de vinylidène. Le mélange est alors homogénéisé sous agitation magnétique pendant 48 heures à 50°C. Le mélange homogène est ensuite coulé sur une plaque de verre horizontale et l'épaisseur du film liquide est uniformisée par le passage d'un applicateur calibré à 300 µm. Après séchage du film sous hotte à flux laminaire, le matériau composite résultant est aisément décollé de son support par immersion dans l'eau.

On obtient alors une membrane autosupportée de 25 µm d'épaisseur.

La capacité d'échange ionique (CEI) de cette membrane est de 2,11, soit plus du double de celle d'une membrane du type Nafion ®.

## Revendications

1. Procédé de fonctionnalisation de particules inorganiques par des polymères comprenant au moins deux types de motifs répétitifs différents, dit premier motif répétitif et deuxième motif répétitif, porteurs chacun d'un groupe échangeur de protons différent, ledit procédé comprenant les étapes suivantes :
a) une étape de greffage covalent de particules inorganiques par un composé organique, par mise en contact desdites particules avec un agent de couplage comprenant au moins un groupe apte à se lier, de manière covalente, aux particules, moyennant quoi il résulte des particules inorganiques liées, de manière covalente, à un composé organique, qui est un reste dudit agent de couplage, ledit reste comprenant, en outre, un groupe apte à réagir, de manière covalente, avec un groupe fonctionnel du polymère issu de l'étape d) ;
b) une étape de polymérisation anionique d'au moins deux types de monomères, à savoir un premier monomère et un deuxième monomère différents l'un de l'autre, porteurs chacun d'au moins un groupe précurseur d'un groupe échangeur de protons différent, moyennant quoi il résulte un polymère comprenant au moins deux types de motifs répétitifs différents porteurs chacun d'un groupe précurseur d'un groupe échangeur de protons différent et comportant une extrémité anionique ;
c) une étape de réaction de terminaison de la polymérisation anionique de l'étape b) par mise en contact du polymère issu de cette étape avec un agent de terminaison comportant un groupe (dit groupe X) apte à réagir avec l'extrémité anionique dudit polymère pour former une liaison covalente, moyennant quoi il résulte un polymère comprenant au moins deux types de motifs répétitifs différents porteurs chacun d'un groupe précurseur d'un groupe échangeur de protons différent et comportant, à l'une de ses extrémités, un reste dudit agent de terminaison ;
d) une étape de fonctionnalisation du polymère obtenu à l'issue de l'étape c) par mise en contact dudit polymère issu de l'étape c) avec un agent de fonctionnalisation comportant un groupe (dit groupe Z) apte à réagir avec un groupe (dit groupe W) dudit reste d'agent de terminaison pour former un groupe fonctionnel apte à réagir, de manière covalente avec les particules obtenues à l'étape a), moyennant quoi il résulte un polymère comprenant au moins deux types de motifs répétitifs différents porteurs chacun d'un groupe précurseur d'un groupe échangeur de protons différent et comportant, à l'une de ses extrémités, ledit groupe fonctionnel lié, de manière covalente, au reste dudit agent de terminaison ;
e) une étape de mise en contact des particules obtenues à l'étape a) avec les polymères obtenus à l'étape d) engendrant une réaction covalente entre le groupe fonctionnel et le groupe du reste d'agent de couplage défini à l'étape a), moyennant quoi il résulte des particules inorganiques fonctionnalisées, de manière covalente, par des polymères comprenant au moins deux types de motifs répétitifs différents porteurs chacun d'un groupe précurseur d'un groupe échangeur de protons différent ;
f) une étape de transformation du ou des groupes précurseurs en groupes échangeurs de protons.

2. Procédé de fonctionnalisation selon la revendication 1, dans lequel les particules inorganiques sont choisies parmi les particules de zéolithes, les particules de phosphates de zirconium, les particules de phosphonates de zirconium, les particules d'argiles, les particules d'oxyde.

3. Procédé de fonctionnalisation selon la revendication 1 ou 2, dans lequel les particules inorganiques sont des particules d'oxyde choisies parmi les particules de silice, les particules d'alumine, les particules de zircone et les particules d'oxyde de titane.

4. Procédé de fonctionnalisation selon l'une quelconque des revendications précédentes, dans lequel le groupe de l'agent de couplage apte à se lier, de manière covalente, aux particules est choisi parmi les groupes de formules suivantes :
- COOR¹ avec R¹ représentant un atome d'hydrogène, un groupe alkyle comprenant de 1 à 30 atomes de carbone ou un groupe phényle ;
- COCl ;
- COCH₂CO-R¹ avec R¹ représentant un atome d'hydrogène, un groupe alkyle comprenant de 1 à 30 atomes de carbone ou un groupe phényle ;
- PO(OH)₂, -PO(OR²)(OH) ou -PO(OR²)(OR³) avec R² et R³, identiques ou différents, représentant un groupe alkyle comprenant de 1 à 30 atomes de carbone ou un groupe phényle ;
- CO(NHOH) ;
- M(OR⁴)ₙ₋ₓ₋₁Zₓ avec x étant un entier allant de 0 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- OH;
et les combinaisons de ceux-ci.

5. Procédé de fonctionnalisation selon l'une quelconque des revendications précédentes, dans lequel l'agent de couplage comprend au moins un groupe apte à réagir avec un groupe fonctionnel du polymère préparé à l'étape d) pour former une liaison covalente, lequel groupe est un groupe nucléophile choisi parmi les groupes de formules suivantes :
- NH(R⁵) avec R⁵ représentant un atome d'hydrogène, un groupe alkyle comprenant de 1 à 30 atomes de carbone ou un groupe phényle ;
- OH ;
- MgX
avec X représentant un atome d'halogène.

6. Procédé de fonctionnalisation selon l'une quelconque des revendications précédentes, dans lequel le premier monomère et le deuxième monomère porteurs chacun d'au moins un groupe précurseur d'un groupe échangeur de protons différent sont respectivement, un monomère porteur d'un groupe précurseur d'un groupe acide sulfonique et un monomère porteur d'un groupe précurseur d'un groupe acide phosphonique.

7. Procédé de fonctionnalisation selon l'une quelconque des revendications précédentes, dans lequel le premier monomère est un monomère éthylénique porteur d'un groupe ester d'acide sulfonique et le deuxième monomère est un monomère éthylénique porteur d'un groupe ester d'acide phosphonique.

8. Procédé de fonctionnalisation selon l'une quelconque des revendications précédentes, dans lequel l'agent de terminaison comprend au moins un groupe (dit groupe W) apte à réagir avec un agent de fonctionnalisation de l'étape d), ce groupe W étant un groupe éthylénique répondant à la formule -CR¹¹=CR¹²R¹³, avec R¹¹, R¹² et R¹³ représentant, indépendamment, l'un de l'autre, un atome d'hydrogène ou un groupe alkyle.

9. Procédé de fonctionnalisation selon l'une quelconque des revendications précédentes, dans lequel l'agent de terminaison est un composé halogénoallyle.

10. Procédé de fonctionnalisation selon l'une quelconque des revendications précédentes, dans lequel, lorsque W est un groupe éthylénique, l'agent de fonctionnalisation est un agent d'époxydation pour former un groupe fonctionnel epoxyde après réaction avec le groupe W.

11. Procédé de fonctionnalisation selon l'une quelconque des revendications précédentes, dans lequel, lorsque W est un groupe éthylénique, l'agent de fonctionnalisation comporte comme groupe Z, un groupe peracide.

12. Particules susceptibles d'être obtenues par un procédé tel que défini selon l'une quelconque des revendications 1 à 11.

13. Matériau composite conducteur de protons comprenant une matrice polymérique au sein de laquelle sont dispersées des particules telles que définies à la revendication 12.

14. Membrane de pile à combustible comprenant un matériau composite conducteur tel que défini à la revendication 13.

15. Dispositif de pile à combustible comprenant au moins un assemblage électrode-membrane-électrode, dans lequel la membrane est telle que définie selon la revendication 14.

## Patentansprüche

1. Verfahren zur Funktionalisierung anorganischer Partikel mit Polymeren, die mindestens zwei Arten von verschiedenen wiederkehrenden Einheiten enthalten, erste wiederkehrende Einheit und zweite wiederkehrende Einheit genannt, die jeweils eine andere Protonenaustauschgruppe tragen, wobei das Verfahren die folgenden Schritte umfasst:
a) einen Schritt des kovalenten Pfropfens anorganischer Partikel mit einer organischen Verbindung durch Inkontaktbringen der Partikel mit einem Kopplungsmittel, das mindestens eine Gruppe enthält, die dazu geeignet ist, sich kovalent an die Partikel zu binden, wodurch anorganische Partikel entstehen, die kovalent an eine organische Verbindung gebunden sind, die ein Rest des Kopplungsmittels ist, wobei der Rest ferner eine Gruppe enthält, die dazu geeignet ist, mit einer funktionellen Gruppe des Polymers aus Schritt d) kovalent zu reagieren;
b) einen Schritt der anionischen Polymerisation von mindestens zwei Arten von Monomeren, nämlich einem ersten Monomer und einem zweiten Monomer, die sich voneinander unterscheiden und jeweils mindestens eine Vorläufergruppe einer anderen Protonenaustauschgruppe tragen, wodurch ein Polymer entsteht, das mindestens zwei Arten von verschiedenen wiederkehrenden Einheiten enthält, die jeweils eine Vorläufergruppe einer anderen Protonenaustauschgruppe tragen und ein anionisches Ende aufweisen;
c) einen Schritt der Reaktion auf die Terminierung der anionischen Polymerisation von Schritt b) durch Inkontaktbringen des aus diesem Schritt entstandenen Polymers mit einem Terminierungsmittel, das eine Gruppe (X-Gruppe genannt) enthält, die dazu geeignet ist, mit dem anionischen Ende des Polymers zu reagieren, um eine kovalente Bindung zu bilden, wodurch ein Polymer entsteht, das mindestens zwei Arten von verschiedenen wiederkehrenden Einheiten umfasst, die jeweils eine Vorläufergruppe einer anderen Protonenaustauschgruppe tragen, und das an einem seiner Enden einen Rest des Terminierungsmittels aufweist;
d) einen Schritt der Funktionalisierung des nach Schritt c) erhaltenen Polymers durch Inkontaktbringen des Polymers aus Schritt c) mit einem Funktionalisierungsmittel, das eine Gruppe (Z-Gruppe genannt) enthält, die dazu geeignet ist, mit einer Gruppe (W-Gruppe genannt) von dem Rest des Terminierungsmittels unter Bildung einer funktionellen Gruppe zu reagieren, die dazu geeignet ist, kovalent mit den in Schritt a) erhaltenen Partikeln zu reagieren, wodurch sich ein Polymer ergibt, das mindestens zwei Arten von verschiedenen wiederkehrenden Einheiten enthält, die jeweils eine Vorläufergruppe einer anderen Protonenaustauschgruppe tragen, und das an einem seiner Enden die funktionelle Gruppe enthält, die kovalent an den Rest des Terminierungsmittels gebunden ist;
e) einen Schritt des Inkontaktbringens der in Schritt a) erhaltenen Partikel mit den in Schritt d) erhaltenen Polymeren, wodurch eine kovalente Reaktion zwischen der funktionellen Gruppe und der Gruppe des Restes des in Schritt a) definierten Kopplungsmittels bewirkt wird, wodurch anorganische Partikel entstehen, die kovalent mit Polymeren funktionalisiert sind, die mindestens zwei Arten von verschiedenen wiederkehrenden Einheiten enthalten, die jeweils eine Vorläufergruppe einer anderen Protonenaustauschgruppe tragen;
f) einen Schritt der Transformation der Vorläufergruppe(n) in Protonenaustauschgruppen.

2. Verfahren zur Funktionalisierung nach Anspruch 1, wobei die anorganischen Partikel ausgewählt sind aus Zeolithpartikeln, Zirkoniumphosphatpartikeln, Zirkoniumphosphanatpartikeln, Tonpartikeln, Oxidpartikeln.

3. Verfahren zur Funktionalisierung nach Anspruch 1 oder 2, wobei die anorganischen Partikel Oxidpartikel sind, ausgewählt aus Siliziumdioxidpartikeln, Aluminiumoxidpartikeln, Zirkonoxidpartikeln und Titanoxidpartikeln.

4. Verfahren zur Funktionalisierung nach einem der vorangehenden Ansprüche, wobei die Gruppe des Kopplungsmittels, das dazu geeignet ist, sich kovalent an die Partikel zu binden, ausgewählt ist aus den Gruppen folgender Formeln:
- COOR¹, wobei R¹ ein Wasserstoffatom, eine Alkylgruppe mit 1 bis 30 Kohlenstoffatomen oder eine Phenylgruppe darstellt;
- COCI;
- COCH₂CO-R¹, wobei R¹ ein Wasserstoffatom, eine Alkylgruppe mit 1 bis 30 Kohlenstoffatomen oder eine Phenylgruppe darstellt;
- PO(OH)₂, -PO(OR²)(OH) oder -PO(OR²)(OR³), wobei R² und R³, identisch oder verschieden, eine Alkylgruppe mit 1 bis 30 Kohlenstoffatomen oder eine Phenylgruppe darstellen;
- CO(NHOH);
- M(OR⁴)ₙ₋ₓ₋₁Zₓ, wobei x eine ganze Zahl von O bis (n-1) ist, wobei M ein Metall oder ein Metalloid ist, n ein Oxidationsgrad von M ist, R⁴ ein Wasserstoffatom, eine Alkylgruppe mit 1 bis 30 Kohlenstoffatomen, eine Phenylgruppe, ein monovalentes Metallkation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt, und Z ein Wasserstoffatom, eine Alkylgruppe mit 1 bis 30 Kohlenstoffatomen, eine Phenylgruppe oder ein Halogenatom darstellt;
- SO₃M', wobei M' ein Wasserstoffatom, ein monovalentes Metallkation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt;
- B(OM')₂, wobei M' ein Wasserstoffatom, ein monovalentes Metallkation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt;
- OH ;
und deren Kombinationen.

5. Verfahren zur Funktionalisierung nach einem der vorangehenden Ansprüche, wobei das Kopplungsmittel zumindest eine Gruppe enthält, die dazu geeignet ist, mit einer funktionellen Gruppe des in Schritt d) hergestellten Polymers zu reagieren, um eine kovalente Bindung zu bilden, wobei diese Gruppe eine nukleophile Gruppe ist, ausgewählt aus den Gruppen der folgenden Formeln:
- NH(R⁵), wobei R⁵ ein Wasserstoffatom, eine Alkylgruppe mit 1 bis 30 Kohlenstoffatomen oder eine Phenylgruppe darstellt;
- OH ;
- MgX, wobei X ein Halogenatom darstellt.

6. Verfahren zur Funktionalisierung nach einem der vorangehenden Ansprüche, wobei das erste Monomer und das zweite Monomer, die jeweils zumindest eine Vorläufergruppe einer anderen Protonenaustauschgruppe tragen, ein Monomer, das eine Vorläufergruppe einer Sulfonsäuregruppe trägt, bzw. ein Monomer, das eine Vorläufergruppe einer Phosphonsäuregruppe trägt, sind.

7. Verfahren zur Funktionalisierung nach einem der vorangehenden Ansprüche, wobei das erste Monomer ein Ethylenmonomer ist, das eine Sulfonsäureestergruppe trägt, und das zweite Monomer ein Ethylenmonomer ist, das eine Phosphonsäureestergruppe trägt.

8. Verfahren zur Funktionalisierung nach einem der vorangehenden Ansprüche, wobei das Terminierungsmittel zumindest eine Gruppe (W-Gruppe genannt) enthält, die dazu geeignet ist, mit einem Funktionalisierungsmittel aus Schritt d) zu reagieren, wobei diese W-Gruppe eine Ethylengruppe ist, die der Formel -CR¹¹ = CR¹²R¹³ entspricht, wobei R¹¹, R¹² und R¹³ unabhängig voneinander ein Wasserstoffatom oder eine Alkylgruppe darstellen.

9. Verfahren zur Funktionalisierung nach einem der vorangehenden Ansprüche, wobei das Terminierungsmittel eine Halogenalkylverbindung ist.

10. Verfahren zur Funktionalisierung nach einem der vorangehenden Ansprüche, wobei dann, wenn W eine Ethylengruppe ist, das Funktionalisierungsmittel ein Epoxidierungsmittel ist, um nach der Reaktion mit der W-Gruppe eine funktionelle Epoxidgruppe zu bilden.

11. Verfahren zur Funktionalisierung nach einem der vorangehenden Ansprüche, wobei dann, wenn W eine Ethylengruppe ist, das Funktionalisierungsmittel als Z-Gruppe eine Persäuregruppe enthält.

12. Partikel, die mit einem Verfahren nach einem der Ansprüche 1 bis 11 erhalten werden können.

13. Protonenleitendes Verbundmaterial mit einer Polymermatrix, in der die Partikel nach Anspruch 12 dispergiert sind.

14. Brennstoffzellenmembran mit einem leitenden Verbundmaterial nach Anspruch 13.

15. Brennstoffzellenvorrichtung mit zumindest einer Elektroden-Membran-Elektroden-Anordnung, in der die Membran nach Anspruch 14 ausgeführt ist.

## Claims

1. A process for functionalising inorganic particles by polymers comprising at least two different types of repeating units, called a first repeating unit and a second repeating unit, each carrying a different proton exchange group, said process comprising the following steps:
a) a step of covalently grafting inorganic particles by an organic compound, by contacting said particles with a coupling agent comprising at least one group able to be covalently bonded to the particles, whereby this results in inorganic particles covalently bonded to an organic compound, which is a residue of said coupling agent, said residue further comprising a group able to covalently react with a functional group of the polymer from step d);
b) a step of anionically polymerising at least two types of monomers, namely a first monomer and a second monomer different from each other, each carrying at least one precursor group for a different proton exchange group, whereby this results in a polymer comprising at least two different types of repeating units each carrying a precursor group for a different proton exchange group and including an anionic end;
c) a step of termination reaction of the anionic polymerisation of step b) by contacting the polymer from this step with a termination agent including a group (called a group X) able to react with the anionic end of said polymer to form a covalent bond, whereby this results in a polymer comprising at least two different types of repeating units each carrying a precursor group for a different proton exchange group and including, at one end thereof, a residue of said termination agent;
d) a step of functionalising the polymer obtained at the end of step c) by contacting the said polymer from step c) with a functionalising agent including a group (called group Z) able to react with a group (called group W) of said residue of termination agent to form a functional group able to covalently react with the particles obtained in step a), whereby this results in a polymer comprising at least two different types of repeating units each carrying a precursor group for a different proton exchange group and including, at one end thereof, said functional group covalently bonded to the residue of said termination agent;
e) a step of contacting the particles obtained in step a) with the polymers obtained in step d) generating a covalent reaction between the functional group and the group of the residue of coupling agent defined in step a), whereby this results in inorganic particles covalently functionalised by polymers comprising at least two different types of repeating units each carrying a precursor group for a different proton exchange group;
f) a step of transforming the precursor group(s) into proton exchange groups.

2. The functionalising process according to claim 1, wherein the inorganic particles are chosen from zeolite particles, zirconium phosphate particles, zirconium phosphonate particles, clay particles, oxide particles.

3. The functionalising process according to claim 1 or 2, wherein the inorganic particles are oxide particles chosen from silica particles, alumina particles, zirconia particles and titania particles.

4. The functionalising process according to any of the preceding claims, wherein the group of the coupling agent able to be covalently bonded to the particles is chosen from the groups of the following formulae:
- COOR¹ with R¹ representing a hydrogen atom, an alkyl group comprising from 1 to 30 carbon atoms or a phenyl group;
- COCI;
- COCH₂CO-R¹ with R¹ representing a hydrogen atom, an alkyl group comprising from 1 to 30 carbon atoms or a phenyl group;
- PO(OH)₂, -PO(OR²)(OH) or -PO(OR²)(OR³) with R² and R³, identical or different, representing an alkyl group comprising from 1 to 30 carbon atoms or a phenyl group;
- CO(NHOH);
- M(OR⁴)ₙ₋ₓ₋₁Zₓ with x being an integer ranging from 0 to (n-1), M being a metal or a metalloid, n being a degree of oxidation of M, R⁴ representing a hydrogen atom, an alkyl group comprising from 1 to 30 carbon atoms, a phenyl group, a monovalent metal cation, or a group of the formula N⁺R¹₄, with R¹ representing a hydrogen atom, an alkyl group comprising from 1 to 30 carbon atoms, or a phenyl group, and Z represents a hydrogen atom, an alkyl group comprising from 1 to 30 carbon atoms, a phenyl group or a halogen atom;
- SO₃M' with M' representing a hydrogen atom, a monovalent metal cation or a group of the formula N⁺R¹₄ with R¹ representing a hydrogen atom, an alkyl group comprising from 1 to 30 carbon atoms or a phenyl group;
- B(OM')₂ with M' representing a hydrogen atom, a monovalent metal cation or a group of the formula N⁺R¹₄, with R¹ representing a hydrogen atom, an alkyl group comprising from 1 to 30 carbon atoms or a phenyl group;
- OH ;
and combinations thereof.

5. The functionalising process according to any of the preceding claims, wherein the coupling agent comprises at least one group able to react with a functional group of the polymer prepared in step d) to form a covalent bond, said group being a nucleophilic group chosen from the groups of following formulae:
- NH(R⁵) with R⁵ representing a hydrogen atom, an alkyl group comprising from 1 to 30 carbon atoms or a phenyl group;
- OH ;
- MgX
with X representing a halogen atom.

6. The functionalising process according to any of the preceding claims, wherein the first monomer and the second monomer each carrying at least one precursor group for a different proton exchange group are respectively a monomer carrying a precursor group for a sulfonic acid group and a monomer carrying a precursor group for a phosphonic acid group.

7. The functionalising process according to any of the preceding claims, wherein the first monomer is an ethylenic monomer carrying a sulfonic acid ester group and the second monomer is an ethylenic monomer carrying a phosphonic acid ester group.

8. The functionalising process according to any of the preceding claims, wherein the termination agent comprises at least one group (called a group W) able to react with a functionalising agent of step d), this group W being an ethylenic group having the formula -CR¹¹=CR¹²R¹³, with R¹¹, R¹² and R¹³ representing, independently of each other, a hydrogen atom or an alkyl group.

9. The functionalising process according to any of the preceding claims, wherein the termination agent is an haloallyl compound.

10. The functionalising process according to any of the preceding claims, wherein, when W is an ethylenic group, the functionalising agent is an epoxidation agent to form an epoxide functional group after reacting with the group W.

11. The functionalising process according to any of the preceding claims, wherein, when W is an ethylenic group, the functionalising agent includes as a group Z, a peracid group.

12. Particles likely to be obtained by a process as defined in any of claims 1 to 11.

13. A proton-conducting composite material comprising a polymeric matrix within which particles as defined in claim 12 are dispersed.

14. A fuel cell membrane comprising a conducting composite material as defined in claim 13.

15. A fuel cell device comprising at least one electrode-membrane-electrode assembly, wherein the membrane is as defined in claim 14.
